# EUROPÄISCHE PATENTANMELDUNG

(11) **EP 4 425 288 A1**
(43) Veröffentlichungstag der Anmeldung: **04.09.2024**
(21) Anmeldenummer: 23159753.5
(22) Anmeldetag: 02.03.2023
(51) Int. Cl.: G05B 23/02

(54) **VERFAHREN ZUM BEREITSTELLEN EINES AKTUELLEN STATUS EINES GERÄTS FÜR EIN NETZWERK AUS PHYSISCHEN GERÄTEN, COMPUTERPROGRAMMPRODUKT, COMPUTERLESBARES SPEICHERMEDIUM SOWIE ÜBERWACHUNGSSYSTEM**

(71) Anmelder: Siemens Aktiengesellschaft, 80333 München (DE)
(72) Erfinder: Bardenhagen, Cedric, 70435 Stuttgart (DE); Mühlhausen, Timo, 90482 Nürnberg (DE); Petzold, Carolin, 81375 München (DE); Teschke, Jakob, 80639 München (DE)
(74) Vertreter: Siemens Patent Attorneys

(57) **Zusammenfassung**

Die Erfindung betrifft ein Verfahren zum Bereitstellen eines aktuellen Status (12) eines Geräts (14) für ein Netzwerk aus physischen Geräten mittels eines Überwachungssystems (10), mit den Schritten:
- Erfassen eines ersten Zustands (Z1) eines ersten Bauteils (22) des Geräts (14) mittels einer geräteinternen Recheneinrichtung (18) des Überwachungssystems (10);
- Erfassen von zumindest einem zweiten Zustand (Z2) eines zweiten Bauteils (24) des Geräts (14) mittels der geräteinternen Recheneinrichtung (18);
- Übermitteln des ersten Zustands (Z1) und des zweiten Zustands (Z2) an eine zentrale elektronische Recheneinrichtung (20) des Überwachungssystems (10);
- Fusionieren des ersten Zustands (Z1) mit dem zweiten Zustand (Z2) und in Abhängigkeit davon Ermitteln des aktuellen Status (12) des Geräts (14) mittels der zentralen elektronischen Recheneinrichtung (20); und
- Bereitstellen des aktuellen Status (12) zum Abrufen mittels der zentralen elektronischen Recheneinrichtung (20). Ferner betrifft die Erfindung ein Computerprogrammprodukt, ein computerlesbares Speichermedium sowie ein Überwachungssystem (10) .

## Beschreibung

Unabhängig vom grammatikalischen Geschlecht eines bestimmten Begriffes sind Personen mit männlicher, weiblicher oder anderer Geschlechteridentität mit umfasst.

Die Erfindung betrifft ein Verfahren zum Bereitstellen eines aktuellen Status eines Geräts für ein Netzwerk aus physischen Geräten, die mit einem Kommunikationsnetzwerk verbunden werden, mittels eines Überwachungssystems. Ferner betrifft die Erfindung ein Computerprogrammprodukt, ein computerlesbares Speichermedium sowie ein Überwachungssystem.

Bisher ist es schwierig, wenn nicht gar unmöglich, den technischen Zustand einer Industrieanlage umfassend und gleichzeitig für nicht-technische Adressaten verständlich zu beschreiben. Insbesondere ist es für nicht-technische Adressaten nicht möglich, auf einem Blick zu beurteilen, ob die Anlage innerhalb der normalen technischen Grenzen arbeitet oder ob Instandhaltungsmaßnahmen erforderlich sind, ob die Anlage ihre vorgesehene betriebliche Funktion erfüllen kann und ob der wirtschaftliche Wert der Anlage durch den technischen Zustand beeinträchtigt wird, weil sie nicht über das erforderliche technische Know-how verfügen. Es gibt keine Methode, um einen detaillierten technischen Überblick über die Betriebsparameter der Anlage mit Zustandsindikatoren zu verknüpfen, die für nicht-technische Interessengruppen transparent sind. Zur Veranschaulichung des Problems sei eine im Risikomanagement eines Finanzinstituts ansässige Asset-Management-Abteilung genannt, die beurteilen muss, ob ein gewisses Objekt bei Vertragsablauf den erwarteten Restwert erbringen wird. Solche Asset-Management-Teams haben keine Möglichkeit, die technischen Eigenheiten jedes einzelnen Assets zu bewerten, und benötigen eine entsprechend aggregierte Darstellung.

Der Stand der Technik umfasst Methoden und Vorrichtungen, die darauf abzielen, spezifische Fehlerzustände einzelner physischer Komponenten einer Anlage oder Gruppen solcher Komponenten zu erkennen. Der Stand der Technik, der der Erfindung am nächsten kommt, umfasst alle Arten von Warnsystemen, die installiert werden, um anzuzeigen, dass ein Betriebsparameter einer Anlage außerhalb eines zulässigen Bereichs liegt. Diese Lösungen richten sich jedoch an technische Experten, wie zum Beispiel Wartungspersonal, und sind nicht dafür vorgesehen oder geeignet, nicht-technische Interessengruppen zu informieren oder deren Geschäftsprozesse zu unterstützen. Außerdem bieten solche Systeme keine zentrale Anlaufstelle für die Bewertung des Gesamtzustands der Anlage, sondern beziehen sich immer auf eine Teilmenge der physikalischen Messgrößen, die für den Zustand der Anlage relevant sind.

Aufgabe der vorliegenden Erfindung ist es, ein Verfahren, ein Computerprogrammprodukt, ein computerlesbares Speichermedium sowie ein Überwachungssystem zu schaffen, mittels welchem auf einfache Art und Weise ein aktueller Zustand eines Geräts bestimmt und bereitgestellt werden kann.

Diese Aufgabe wird durch ein Verfahren, ein Computerprogrammprodukt, ein computerlesbares Speichermedium sowie ein Überwachungssystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bereitstellen eines aktuellen Status eines Geräts für ein Netzwerk aus physischen Geräten, die mit einem Kommunikationsnetzwerk verbunden werden, mittels eines Standard Überwachungssystems. Es erfolgt das Erfassen eines ersten Zustands eines ersten Bauteils des Geräts mittels einer geräteinternen Recheneinrichtung des Überwachungssystems. Es wird zumindest ein zweiter Zustand eines zweiten Bauteils des Geräts mittels der geräteinternen Recheneinrichtung erfasst. Es erfolgt das Übermitteln des ersten Zustands und des zweiten Zustands an eine zentrale elektronische Recheneinrichtung des Überwachungssystems. Der erste Zustand wird mit dem zweiten Zustand fusioniert und in Abhängigkeit davon wird der aktuelle Status des Geräts mittels der zentralen elektronischen Recheneinrichtung ermittelt. Es erfolgt dann das Bereitstellen des aktuellen Status zum Abrufen mittels der zentralen elektronischen Recheneinrichtung.

Insbesondere handelt es sich bei dem Gerät um ein digitalisiertes, also vernetztes (sogenanntes Internet of Things) Gerät (IoT-Asset). Insbesondere können somit mehrere physische Geräte innerhalb eines Kommunikationsnetzwerks, beispielsweise mittels des Internets, verbunden werden. Dabei weist insbesondere das Gerät zumindest ein Kommunikationsmodul auf, mittels welchem beispielsweise die Zustände übermittelt werden können. Ferner weist die zentrale elektronische Recheneinrichtung ein Kommunikationsmodul auf, mittels welchem die entsprechenden Zustände erfasst werden können beziehungsweise empfangen werden können. Insbesondere bildet somit die zentrale elektronische Recheneinrichtung ebenfalls ein Teil des Kommunikationsnetzwerks. Bei dem Kommunikationsnetzwerk handelt es sich um ein industrietaugliches Kommunikationsnetzwerk. Insbesondere ist das Kommunikationsnetzwerk drahtgebunden oder auch alternativ oder ergänzend drahtlos.

Im vorliegenden Ausführungsbeispiel ist somit aus dem Gerät und der zentralen elektronischen Recheneinrichtung das Netzwerk der physischen Geräte ausgebildet. Bei dem Gerät kann es sich beispielsweise um einen Computer, ein Smartphone, ein Haushaltgerät, eine Industrieanlage, eine Maschine oder dergleichen handeln.

Insbesondere ist somit ein Indikatorschema vorgeschlagen, das eine einfache und unkomplizierte Interpretation des technischen Gesamt-Gerätezustands auch für nicht-technische Stakeholder ermöglicht. Dieses Schema kann auch als ein "IoT Asset Index" bezeichnet werden. Insbesondere kann somit vorgeschlagen werden, dass jeder physikalischen Beobachtungsgröße, die für einen technischen Zustand des Geräts relevant ist, ein Zustandsindikator zugewiesen wird und diesen auf eine nicht-technische, benutzerfreundliche Beschreibung des Zustands der Beobachtungsgröße abgebildet werden kann. Insbesondere um einen bestimmten technischen Anlagenparameter auf einen Indikator und auf die nicht-technische, benutzerfreundliche Beschreibung abzubilden, ist eine Kalibrierung durch vorhergehende technische Experten erforderlich. Dies kann zum Beispiel die Feststellung beziehungsweise Festlegung geeigneter oberer und/oder unterer Schwellwerte oder zusätzlicher Bereiche für die entsprechenden Parameter umfassen.

Ein solches Indikatorschema kann dann für jede einzelne Größe definiert werden, die für den Gerätezustand relevant ist, und kann dann auf der Ebene beispielsweise von Teilkomponenten wie Motoren oder Achsen oder ganzen Anlagen wie Fräsmaschinen aggregiert werden. Auf diese Weise können einzelne Indikatoren aggregiert werden, um nicht-technischen Anwendern ein noch umfassenderes Informationsniveau zu bieten, ohne die Transparenz zu beeinträchtigen.

Insbesondere macht es somit die Erfindung überflüssig, technische Experten oder komplexe Dokumentationen zurate zu ziehen, wenn nicht-technische Beteiligte den Anlagenzustand interpretieren müssen. Die Lösung objektiviert beispielsweise die Zustandseinschätzung eines Gutachters auf Basis von reinen Daten. Somit wird wiederholbar und neutral der Zustand der Maschine interpretiert. Damit wird der Einsatz von Gutachtern und Experten reduziert. Vorortbesuche werden durch diese Lösung seltener. Auf diese Weise können Geschäftsprozesse in nicht-technischen Teilen der Wertschöpfungskette schneller, automatisiert, kostengünstiger und mit wesentlich höherer Transparenz für Beteiligte mit nicht-technischem Hintergrund umgesetzt werden.

Gemäß einer vorteilhaften Ausgestaltungsform wird der aktuelle Status bezüglich einer vorgegebenen Funktionsfähigkeit ausgewertet. Dabei kann beispielsweise vorgesehen sein, dass der aktuelle Status derart erzeugt beziehungsweise ausgewertet wird, dass dieser beschreibt, ob im aktuellen Status das Gerät funktionsfähig ist, oder ob im aktuellen Status das Gerät nur bedingt funktionsfähig ist, oder ob im aktuellen Status das Gerät nicht funktionsfähig ist. Somit ist es für einen Außenstehenden sehr einfach ermöglicht, eine entsprechende Bewertung des Geräts, insbesondere eines aktuellen Zustands des Geräts, durchzuführen. Insbesondere kann die Bewertung dahingehend durchgeführt werden, dass bewertet wird, ob das Gerät funktioniert, teilweise funktioniert, aber beispielsweise dennoch seinen Einsatzzweck erfüllt, jedoch eine Wartungsmaßnahme notwendig ist, oder nicht funktioniert und somit nicht geeignet ist, den Einsatzzweck zukünftig zu erfüllen.

Ebenfalls vorteilhaft ist, wenn das erste Bauteil und/oder das zweite Bauteil einer Bauteilgruppe des Geräts zugeordnet werden und der aktuelle Status des Geräts auf Basis eines Zustands der Bauteilgruppe bewertet wird. Dabei kann vorgesehen sein, dass ein aktueller Substatus der Bauteilgruppe bestimmt wird und zusätzlich der Substatus zum Abrufen bereitgestellt wird. Ebenfalls kann vorgesehen sein, dass eine Granularität zum Bestimmen von Bauteilgruppen mittels einer Eingabe eines Nutzers der elektronischen Recheneinrichtung vorgegeben wird. Insbesondere kann somit vorgesehen sein, dass beispielsweise eine einstellbare "Einblickstiefe" in den Gerätezustand bereitgestellt werden kann. Diese Einblickstiefe (Granularität) kann durch den Nutzer vorgegeben werden. Dieser kann beispielsweise einzelne Bauteile zu Subbauteilgruppen beziehungsweise Bauteilgruppen zusammenfassen und entsprechende Subzustände angezeigt bekommen. Insbesondere kann somit der Nutzer sowohl auf einer sehr abstrakten Ebene des Einsatzzwecks des Geräts sowie auch einzelne durch den Nutzer vorgegebener Bauteilgruppen und auch weiterer Untergruppen entsprechend die Funktionstüchtigkeit des Geräts überprüfen. Insbesondere erhält der Benutzer je nach Vorliebe Einblick in die Funktionstüchtigkeit des Geräts oder der Bauteilgruppe, wobei dieser Einblick insbesondere auf der elektronischen Recheneinrichtung visualisiert ist.

Ferner hat es sich als vorteilhaft erwiesen, wenn zum Bestimmen des aktuellen Status des Geräts der erste Zustand des ersten Bauteils mit einem ersten Schwellwert für den ersten Zustand verglichen wird und der zweite Zustand des zweiten Bauteils mit einem zweiten Schwellwert für den zweiten Zustand verglichen wird. Die Schwellwerte können dabei durch Experten vorgegeben werden, wobei die Schwellwerte beispielsweise die Funktionstüchtigkeit des entsprechenden Bauteils beschreiben. Sollte beispielsweise der Schwellwert überschritten werden, so kann die Funktionstüchtigkeit des Bauteils beziehungsweise des Geräts eingeschränkt sein. Sollte der erfasste Zustand insbesondere unterhalb dieses Schwellwerts liegen, so kann zwar eine Beschränkung des Bauteils vorliegen, welche aber beispielsweise das Gerät beziehungsweise das Bauteil oder die Bauteilgruppe nicht beeinträchtigt. Somit kann eine zuverlässige Bewertung des aktuellen Zustands realisiert werden.

Ebenfalls vorteilhaft ist, wenn der aktuelle Status an einer Anzeigeeinrichtung der elektronischen Recheneinrichtung angezeigt wird. Die Anzeigeeinrichtung kann insbesondere in Form einer Darstellung in Form von Ampelstatus ausgebildet sein. Somit ist es für einen Nutzer der zentralen elektronischen Recheneinrichtung ermöglicht, auf einfache Art und Weise den aktuellen Status zu betrachten. Hierbei kann ferner vorgesehen sein, dass einem jeweiligen aktuellen Status eine jeweilige Farbe zugeordnet ist und der aktuelle Status mittels der Farbe angezeigt wird. Es kann beispielsweise vorgesehen sein, dass die volle Einsatzfähigkeit des Geräts mittels einer grünen Farbe, die bedingte Einsatzfähigkeit mittels einer gelben Farbe und die Nichteinsatzfähigkeit mittels einer roten Farbe angezeigt werden. Dies gilt selbstverständlich auch für die entsprechenden Bauteile beziehungsweise Bauteilgruppen, die durch den Nutzer voreingestellt sind. Mit anderen Worten kann eine Ampel bereitgestellt werden, welche es dem Nutzer ermöglicht, auf einfache Art und Weise den aktuellen Status des Geräts/Bauteils/Bauteilgruppe zu erfassen. Die Farben und die Anzahl der Zustände kann selbstverständlich auch abweichen und mit anderen Farben oder Darstellungen bereitgestellt werden. Daher ist die Ampeldarstellung zwar sehr intuitiv für den Benutzer aber dennoch rein beispielhaft und keinesfalls abschließend.

Ferner hat es sich als vorteilhaft erwiesen, wenn in Abhängigkeit von dem aktuellen Zustand ein optisches Warnsignal für einen Nutzer der zentralen elektronischen Recheneinrichtung erzeugt wird und/oder eine Gegenmaßnahme zum Beeinflussen des aktuellen Status mittels der zentralen elektronischen Recheneinrichtung bestimmt und/oder eingeleitet wird. Beispielsweise sollte die Temperatur eines Bauteils im Gerät erhöht sein, so kann eine entsprechende Warnmeldung über eine erhöhte Temperatur an den Nutzer ausgegeben werden. Ferner ist es ermöglicht, dass die zentrale elektronische Recheneinrichtung dann wiederum bestimmen kann, dass beispielsweise eine Kühlung als Gegenmaßnahme erforderlich ist, und kann entsprechende Steuerbefehle, für beispielsweise eine Klimatisierungseinrichtung, erzeugen, sodass als Gegenmaßnahme der erhöhten Temperatur des Geräts eine Kühlung des Geräts durchgeführt wird. Somit sind entsprechende Gegenmaßnahmen ermöglicht, um die Einsatzfähigkeit des Geräts weiterhin aufrecht zu erhalten.

Eine weitere vorteilhafte Ausgestaltungsform sieht vor, dass beim Fusionieren des ersten Zustands und des zweiten Zustands eine jeweilige Gewichtung der Zustände relativ zueinander berücksichtigt wird. Insbesondere können die entsprechenden Gewichtungen durch die Experten entsprechend vorgegeben sein. Beispielsweise haben unterschiedliche Bauteile entsprechende unterschiedliche Gewichtungen, um für die Funktionsfähigkeit des Geräts beziehungsweise für den Einsatzzweck des Geräts notwendig zu sein. Dadurch ist es ermöglicht, dass situationsbedingt der aktuelle Zustand des Geräts/Bauteilgruppe/Bauteil bestimmt werden kann.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ein weiterer Aspekt der Erfindung betrifft daher auch ein computerlesbares Speichermedium mit dem Computerprogrammprodukt.

Ebenfalls betrifft die Erfindung ein Überwachungssystem zum Bereitstellen eines aktuellen Status eines Geräts für ein Netzwerk aus physischen Geräten, die mit einem Kommunikationsnetzwerk verbunden werden, mit zumindest einer geräteinternen elektronischen Recheneinrichtung und einer zentralen elektronischen Recheneinrichtung, wobei das Überwachungssystem zum Durchführen eines Verfahrens nach dem vorhergehenden Aspekt ausgebildet ist. Insbesondere wird das Verfahren mittels des Überwachungssystems durchgeführt.

Die geräteinterne elektronische Recheneinrichtung und/oder die zentrale elektronische Recheneinrichtung weisen insbesondere Prozessoren, Schaltkreise, insbesondere integrierte Schaltkreise, sowie weitere elektronische Bauteile auf, um die entsprechenden Verfahrensschritte durchführen zu können.

Vorteilhafte Ausgestaltungsformen des Verfahrens sind als vorteilhafte Ausgestaltungsformen des Computerprogrammprodukts, des computerlesbaren Speichermediums sowie des Überwachungssystems anzusehen. Das Überwachungssystem weist insbesondere gegenständliche Merkmale auf, um entsprechende Verfahrensschritte durchführen zu können.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, der Figur und der Figurenbeschreibung. Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur der jeweils angegebenen Kombination, sondern auch in anderen Kombinationen verwendbar, ohne den Rahmen der Erfindung zu verlassen.

Die Erfindung wird nun anhand von bevorzugten Ausführungsbeispielen sowie unter Bezugnahme auf die Zeichnungen näher erläutert. Dabei zeigt die einzige Figur ein schematisches Blockschaltbild einer Ausführungsform eines Stromvorhersagesystems.

Dabei zeigen:
- FIG 1: ein schematisches Blockschaltbild gemäß einer Ausführungsform eines Überwachungssystems;
- FIG 2: ein schematisches Blockschaltbild gemäß einer Ausführungsform einer zentralen elektronischen Recheneinrichtung; und
- FIG 3: ein Ablaufdiagramm gemäß einer Ausführungsform des Verfahrens.

In den Figuren sind gleiche oder funktionsgleiche Elemente mit den gleichen Bezugszeichen versehen.

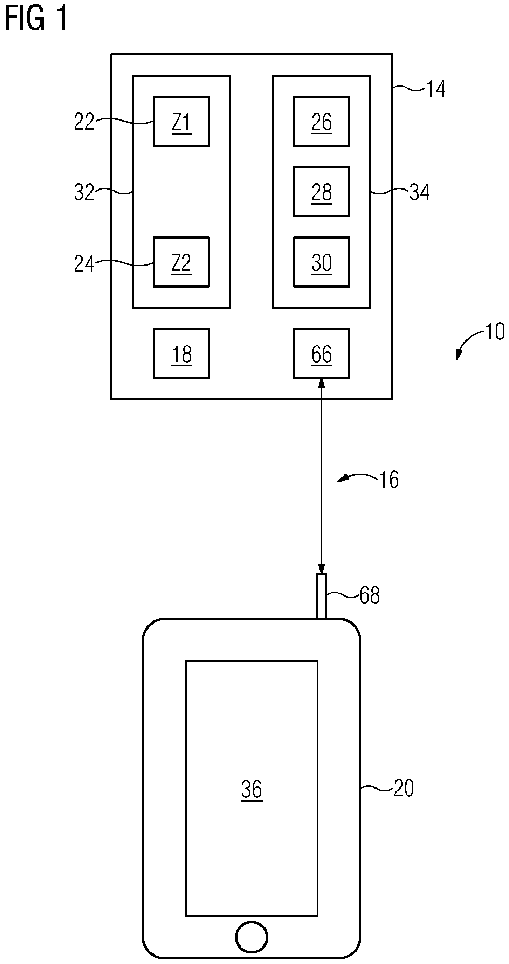

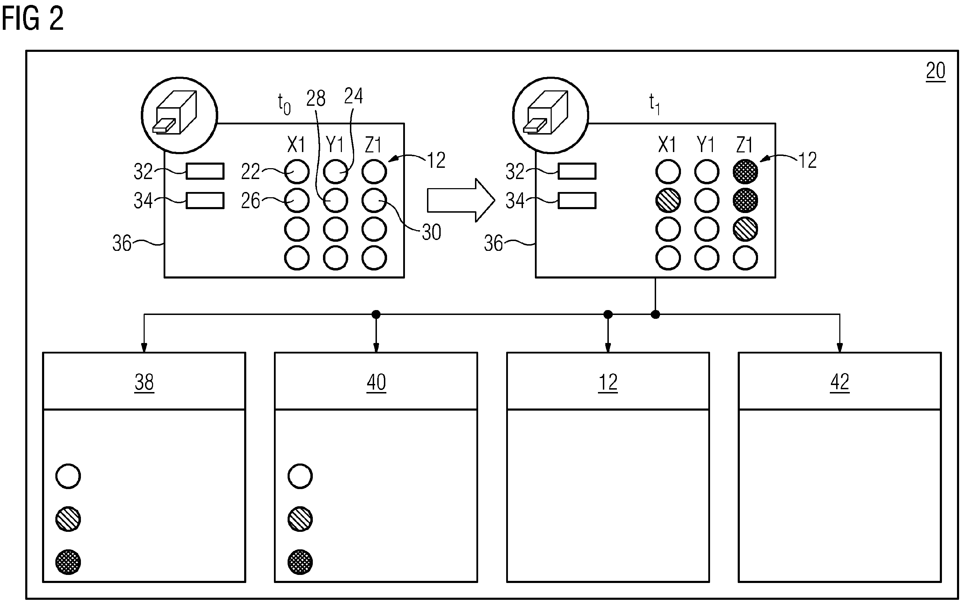

FIG 1 zeigt ein schematisches Blockschaltbild einer Ausführungsform eines Überwachungssystems 10. Das Überwachungssystem 10 ist zum Bereitstellen eines aktuellen Status 12 (FIG 2) eines Geräts 14 für ein Netzwerk aus physischen Geräten, die mit einem Kommunikationsnetzwerk 16 verbunden werden, mit zumindest einer geräteinternen elektronischen Recheneinrichtung 18 und einer zentralen elektronischen Recheneinrichtung 20 ausgebildet. Das Gerät 14 weist zumindest ein Kommunikationsmodul 66 auf.

Beim vorgestellten Verfahren ist insbesondere vorgesehen, dass ein erster Zustand Z1 eines ersten Bauteils 22 des Geräts 14 mittels der geräteinternen Recheneinrichtung 18 erfasst wird. Es erfolgt das Erfassen von zumindest einem zweiten Zustand Z2 eines zweiten Bauteils 24 des Geräts 14 mittels der geräteinternen Recheneinrichtung 18. Es erfolgt das Übermitteln des ersten Zustands Z1 und des zweiten Zustands Z2 an die zentrale elektronische Recheneinrichtung 20. Der erste Zustand Z1 und der zweite Zustand Z2 werden miteinander fusioniert und in Abhängigkeit davon erfolgt das Ermitteln des aktuellen Status 12 des Geräts 14 mittels der zentralen elektronischen Recheneinrichtung 20. Es erfolgt dann das Bereitstellen des aktuellen Status 12 zum Abrufen mittels der zentralen elektronischen Recheneinrichtung 20.

Die FIG 1 zeigt insbesondere, dass auch ein drittes Bauteil 26, ein viertes Bauteil 28 sowie ein fünftes Bauteil 30 vorgesehen sein können. Das erste Bauteil 22 und das zweite Bauteil 24 bilden im vorliegenden Ausführungsbeispiel eine erste Bauteilgruppe 32. Das dritte Bauteil 26, das vierte Bauteil 28 und das fünfte Bauteil 30 bilden wiederum eine zweite Bauteilgruppe 34. Insbesondere zeigt die FIG 1, dass das erste Bauteil 22 und/oder das zweite Bauteil 24, wie bereits beschrieben, einer Bauteilgruppe, insbesondere vorliegend der ersten Bauteilgruppe 32, des Geräts 14 zugeordnet werden und der aktuelle Status 12 des Geräts 14 auf Basis eines Zustands der Bauteilgruppe, vorliegend insbesondere der ersten Bauteilgruppe 32, bewertet wird. Beispielsweise kann als Bauteil eine Achse einer Maschine angesehen. Eine Gesamtheit von Achsen der Maschine kann beispielsweise als Bauteilgruppe angesehen werden. Es kann ferner vorgesehen sein, dass auch ein aktueller Substatus der Bauteilgruppe 32, 34 bestimmt wird und zusätzlich der Substatus zum Abrufen bereitgestellt wird. Es kann dabei vorgesehen sein, dass eine Granularität zum Bestimmen von Bauteilgruppen 32, 34 mittels einer Eingabe eines Nutzers der zentralen elektronischen Recheneinrichtung 20 vorgegeben wird.

FIG 1 zeigt ferner, dass der aktuelle Status 12 an einer Anzeigeeinrichtung 36 der zentralen elektronischen Recheneinrichtung 20 angezeigt werden kann.

FIG 2 zeigt ein schematisches Blockschaltbild gemäß einer Ausführungsform einer zentralen elektronischen Recheneinrichtung 20. Insbesondere zeigt die FIG 2, beispielsweise dass auf der linken Seite zu einem Zeitpunkt t₀ der aktuelle Zustand 12 des Geräts 14 in Ordnung war und zu einem Zustand t₁ beispielsweise die Zustände der Bauteilgruppen 32, 34 sich verändert haben. Im vorliegenden Ausführungsbeispiel ist insbesondere gezeigt, dass zum Zeitpunkt t₀ angezeigt ist, dass das Gerät 14 seinen Einsatzzweck erfüllt, was beispielsweise in Form einer Ampel angezeigt werden kann. Im vorliegenden Ausführungsbeispiel sind die nicht ausgefüllten Kreise beispielsweise grün dargestellt, die gestrichelten Kreise sind gelb dargestellt und die gekreuzten Kreise sind rot dargestellt. Beispielsweise kann die gelbe Farbe bedeuten, dass im aktuellen Status 12 das Gerät 14 seinen Einsatzzweck nur bedingt erfüllt und die rote Farbe stellt dar, dass das Gerät 14 seinen Einsatzzweck nicht erfüllt.

Die elektronische Recheneinrichtung 20 kann dabei dazu ausgebildet sein, lediglich die aktuellen Zustände Z1, Z2 anzukündigen beziehungsweise anzuzeigen und auszuwerten. Dies ist insbesondere in einem Block 38 gezeigt. In einem Block 40 können beispielsweise entsprechende Gewichtungen vorgesehen sein, sodass die einzelnen Zustände Z1, Z2 unterschiedlich gewichtet werden und somit zu einer unterschiedlichen Bewertung des Gesamtzustands kommen. Des Weiteren kann der Gesamtzustand 12 sozusagen entsprechend bewertet werden sowie eine Veränderung 42 zum letzten Zustand beziehungsweise zur letzten Auswertung kann angezeigt werden.

Die FIG 2 zeigt somit das Indikatorschema, dass eine einfache und unkomplizierte Interpretation des technischen Zustands des Geräts 14 auch für nicht-technische Stakeholder ermöglicht. Dies kann insbesondere auch als "IoT Asset Index" bezeichnet werden. Dies wird insbesondere dadurch durchgeführt, dass jeder physikalischen Beobachtungsgröße, die für den technischen Zustand des Geräts 14 relevant ist, einen Zustandsindikator zugewiesen wird und diese auf eine nicht-technische, benutzerfreundliche Beschreibung des Zustands der Beobachtungsgröße abgebildet wird. Beispielsweise kann dies, wie in der FIG 2 gezeigt, in Form einer Ampel durchgeführt werden. Ein grüner Indikator kann angezeigt werden, wenn das Gerät 14 innerhalb normaler Parameter arbeitet. Ein gelber Indikator kann vorgegeben werden, sobald eine bestimmte Komponente beziehungsweise Bauteil 22 bis 30 in einem bestimmten Zeitintervall gewartet werden muss und rot, wenn insbesondere ein Schaden droht. Es sind auch andere Indikatorschemata mit nur zwei oder mehr als drei Zuständen für den Fachmann natürlich naheliegend.

Um einen bestimmten technischen Anlagenparameter auf einen Indikator, wie beispielsweise eben beschrieben, und auf technische benutzerfreundliche Beschreibung abzubilden, ist eine Kalibrierung durch insbesondere technische Experten erforderlich. Dies kann zum Beispiel die Festlegung geeigneter oberer und/oder unterer Schwellenwerte oder zulässiger Bereiche für den Parameter umfassen. Ein Beispiel ist die Steifigkeit einer Achse, die beispielsweise wie folgt abgebildet werden kann. Grün, solange sich diese nicht um mehr als 10 Prozent gegenüber seinem Wert bei Bereitstellung ändert. Gelb, wenn sie sich zwischen 10 Prozent und 20 Prozent ändert und rot, wenn sich diese über mehr als 20 Prozent ändert.

Ein solches Indikatorschema kann für jede einzelne Größe definiert werden, die für den Anlagenzustand relevant ist, und kann dann auf der Ebene von Teilkomponenten, wie beispielsweise Motoren oder Achsen, oder ganzen Anlagen, wie Fräsmaschinen, aggregiert werden. Auf diese Weise können einzelne Indikatoren aggregiert werden, um nicht-technischen Anwendern ein noch umfassenderes Informationsniveau zu bieten, ohne die Transparenz zu beeinträchtigen. Zwei beispielhafte, aber nicht abschließende, Methoden sind beispielsweise die Bestimmung des Anteils der entsprechenden Indikatoren, insbesondere die Häufigkeit der Indikatoren an der Gesamtzahl der Indikatoren und die Festsetzung eines Schwellenwerts für diesen Anteil, beispielsweise die Festsetzung des Gesamtindikators, der zu lesen ist, wenn mehr als 3 Prozent aller Indikatoren gelb sind. Ferner kann die Anwendung logischer Operationen aufgrund von Einzelindikatoren genutzt werden, die eine Bauteilgruppe bilden. Als Beispiel sei die Achse einer Fräsmaschine genannt, die durch fünf Einzelindikatoren beschrieben werden kann und der ein gelber Indikator zugewiesen wird, sobald einer der fünf Indikatoren gelb leuchtet.

Auch hier ist zu beachten, dass andere Aggregationsverfahren für Indikatoren möglich sind. Solche Aggregationsschemata erfordern ebenfalls eine Kalibrierung durch technische Experten, ermöglichen es aber auch nicht-technischen Akteuren, den Zustand der Anlagen für ihre geschäftlichen Zwecke zu bewerten.

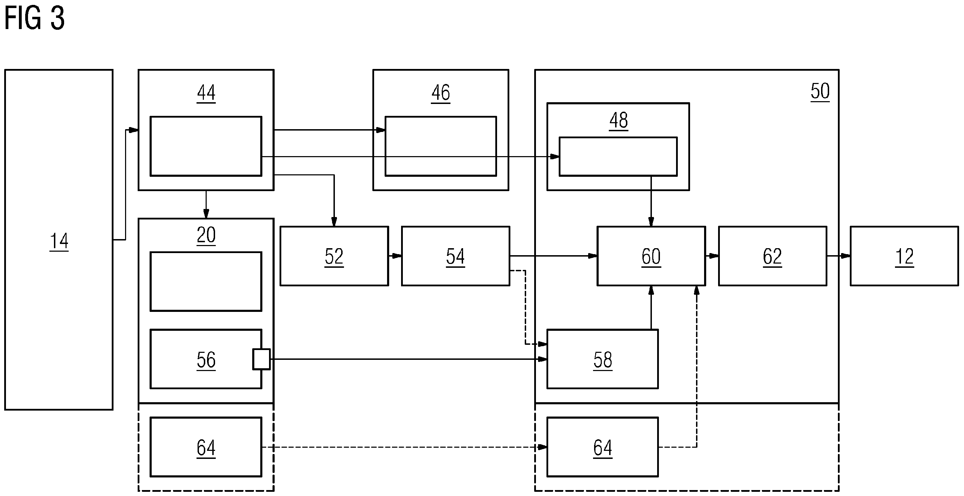

FIG 3 zeigt ein schematisches Ablaufdiagramm gemäß einer Ausführungsform des Verfahrens. Im vorliegenden Ausführungsbeispiel wird als Gerät 14 insbesondere eine Fräsmaschine beschrieben. Die Fräsmaschine weist eine Steuerung 44 auf, die beispielsweise das NC-Programm abarbeitet. Diese NC-SPS enthält Programm-/Zustands- und Betriebsgrößen. Aufgrund der geringen Datenzugriffsrate auf externe Schnittstelen können Zustands- und Prozessvariablen aus dieser Quelle als Niederfrequenzdaten (LFD) betrachtet werden. Die Steuerung 44 ist mit einer Applikation 46 gekoppelt, wobei die Applikation 46 wiederum das LFD der Steuerung 44 überwacht. Die LFD-Zeitreihendaten werden wiederum auf einen Zeitreihenspeicher 48, beispielsweise einer sogenannten Datenaustauschplattform 50, gespeichert. Die Steuerung 44 ist ferner mit einem manuellen Analyseskript 52 gekoppelt, wobei das manuelle Analyseskript 52 mit einer manuellen Optimierungsprüfung 54 gekoppelt ist. Die manuelle Optimierungsprüfung 54 führt eine erste Opticheck-Analyse auf der Grundlage der vom NC abgerufenen Hochfrequenzdaten durch. Die erhaltene Optimierungsprüfung 54 enthält die neuesten Analysemerkmale und dient als Referenzmessung für die zukünftige IAI-Berechnung. Um zukünftige Vergleiche zu ermöglichen, muss der im Zeitreihenspeicher 48 archiviert werden.

Die zentrale elektronische Recheneinrichtung 20 weist insbesondere ebenfalls eine Applikation 56 auf, welche insbesondere auf dem sogenannten Edge-Gerät, vorliegend insbesondere zentralen elektronischen Recheneinrichtung 20, ausgeführt und in regelmäßigen Abständen automatisiert wiederkehrende Optimierungsprüfungen 54 durchführt, die auf der Konfiguration basieren. Bei der Ausführung der sogenannten OC-Routine, wobei OC für das Optimierungsprüfungsverfahren 54 steht, werden Daten mit einer hohen Rate, zum Beispiel in Millisekunden, gesammelt. Nach der Verarbeitung und Aggregation sind diese Ergebnisse über die Datenaustauschplattform 50 abrufbar oder über eine API-Schnittstelle direkt nach der Datenerhebung für externe Personen/Maschinen zugänglich.

Eine Optimierungzeitreihenspeicherungsprüfung 58 führt wiederum eine Speicherung der historischen Maßnahme des Optimierungs-Checks durch, um zukünftige Vergleiche und Berechnungen des IAI zu ermöglichen. Die Bestimmung des aktuellen Status 12 wird vorliegend als Asset-Index-Berechnung 60 (IAI) bezeichnet. Im Berechnungsschritt hierfür werden die historischen Indikatorwerte, zum Beispiel aus dem Optimierungscheck, mit den aktuellen KPI (Key Performance Indicator) verglichen. Bei Überschreitung von Indikatorschwellen werden Ereignisse ausgelöst. Das Ereignis wird insbesondere mithilfe der Ampel beispielsweise zusammengefasst. Mit dem Bezugszeichen 62 ist insbesondere ein sogenanntes Asset-Index-Rest API gezeigt, welches den Nutzern den Zugriff auf die entsprechenden Ergebnisse der Asset-Index-Berechnung 60 ermöglicht.

Mit dem Bezugszeichen 64 ist wiederum eine potentielle Erweiterung der Applikation gezeigt, wobei hierbei die Daten, zum Beispiel ein Spindelstrom, überwacht und verarbeitet werden können, um vertragliche und technische Überschreitungen, zum Beispiel außerhalb der Spezifikation, zu ermitteln. Die Analyseergebnisse dieser Applikation können in Zukunft beispielsweise ebenfalls mit in die Asset-Index-Berechnung 60 mit einfließen.

## Patentansprüche

1. Verfahren zum Bereitstellen eines aktuellen Status (12) eines Geräts (14) für ein Netzwerk aus physischen Geräten, die mit einem Kommunikationsnetzwerk (16) verbunden werden, mittels eines Überwachungssystems (10), mit den Schritten:
- Erfassen eines ersten Zustands (Z1) eines ersten Bauteils (22) des Geräts (14) mittels einer geräteinternen Recheneinrichtung (18) des Überwachungssystems (10);
- Erfassen von zumindest einem zweiten Zustand (Z2) eines zweiten Bauteils (24) des Geräts (14) mittels der geräteinternen Recheneinrichtung (18);
- Übermitteln des ersten Zustands (Z1) und des zweiten Zustands (Z2) an eine zentrale elektronische Recheneinrichtung (20) des Überwachungssystems (10);
- Fusionieren des ersten Zustands (Z1) mit dem zweiten Zustand (Z2) und in Abhängigkeit davon Ermitteln des aktuellen Status (12) des Geräts (14) mittels der zentralen elektronischen Recheneinrichtung (20); und
- Bereitstellen des aktuellen Status (12) zum Abrufen mittels der zentralen elektronischen Recheneinrichtung (20).

2. Verfahren nach Anspruch 1, **dadurch gekennzeichnet, dass** der aktuelle Status (12) bezüglich eines vorgegebenen Einsatzzweckes ausgewertet wird.

3. Verfahren nach Anspruch 2, **dadurch gekennzeichnet, dass** der aktuelle Status (12) derart bestimmt wird, dass dieser beschreibt, ob im aktuellen Status (12) das Gerät (14) seinen Einsatzzweck erfüllt, oder ob im aktuellen Status (12) das Gerät (14) seinen Einsatzzweck nur bedingt erfüllt, oder ob im aktuellen Status (12) das Gerät (14) den Einsatzzweck nicht erfüllt.

4. Verfahren nach einem der vorhergehenden Ansprüche, **dadurch gekennzeichnet, dass** die zentrale elektronische Recheneinrichtung (20) als mobile elektronische Recheneinrichtung bereitgestellt wird.

5. Verfahren nach einem der vorhergehenden Ansprüche, **dadurch gekennzeichnet, dass** das erste Bauteil (22) und/oder das zweite Bauteil (24) einer Bauteilgruppe (32, 34) des Geräts (14) zugeordnet werden und der aktuelle Status (12) des Geräts (14) auf Basis eines Zustands der Bauteilgruppe (32, 34) bewertet wird.

6. Verfahren nach Anspruch 5, **dadurch gekennzeichnet, dass** ein aktueller Substatus der Bauteilgruppe (32, 34) bestimmt wird und zusätzlich der Substatus zum Abrufen bereitgestellt wird.

7. Verfahren nach Anspruch 6, **dadurch gekennzeichnet, dass** eine Granularität zum Bestimmen von Bauteilgruppen (32, 34) mittels einer Eingabe eines Nutzers der zentralen elektronischen Recheneinrichtung (20) vorgegeben wird.

8. Verfahren nach einem der vorhergehenden Ansprüche, **dadurch gekennzeichnet, dass** zum Bestimmen des aktuellen Status (12) des Geräts (14) der erste Zustand (Z1) des ersten Bauteils (22) mit einem ersten Schwellwert für den ersten Zustand (Z1) verglichen wird und der zweite Zustand (Z2) des zweiten Bauteils (24) mit einem zweiten Schwellwert für den zweiten Zustand (Z2) verglichen wird.

9. Verfahren nach einem der vorhergehenden Ansprüche, **dadurch gekennzeichnet, dass** der aktuelle Status an einer Anzeigeeinrichtung der zentralen elektronischen Recheneinrichtung angezeigt wird.

10. Verfahren nach Anspruch 9, **dadurch gekennzeichnet, dass** einem jeweiligen aktuellen Status eine jeweilige Farbe zugeordnet ist und der aktuelle Status (12) mittels einer Farbe angezeigt wird.

11. Verfahren nach einem der vorhergehenden Ansprüche, **dadurch gekennzeichnet, dass** in Abhängigkeit von dem aktuellen Zustand (12) ein Warnsignal für einen Nutzer der zentralen elektronischen Recheneinrichtung (20) erzeugt wird und/oder eine Gegenmaßnahme zum Beeinflussen des aktuellen Status (12) mittels der zentralen elektronischen Recheneinrichtung (20) bestimmt und/oder eingeleitet wird.

12. Verfahren nach einem der vorhergehenden Ansprüche, **dadurch gekennzeichnet, dass** beim Fusionieren des ersten Zustands (Z1) und des zweiten Zustands (Z2) eine jeweilige Gewichtung der Zustände (Z1, Z2) relativ zueinander berücksichtigt wird.

13. Computerprogrammprodukt mit Programmcodemitteln, welche eine elektronische Recheneinrichtung (18, 20) dazu veranlassen, wenn die Programmcodemittel von der elektronischen Recheneinrichtung (18, 20) abgearbeitet werden, ein Verfahren nach einem der Ansprüche 1 bis 12 durchzuführen.

14. Computerlesbares Speichermedium mit zumindest dem Computerprogrammprodukt nach Anspruch 13.

15. Überwachungssystem (10) zum Bereitstellen eines aktuellen Status (12) eines Geräts (14) für ein Netzwerk aus physischen Geräten, die mit einem Kommunikationsnetzwerk (16) verbunden werden, mit zumindest einer geräteinternen elektronischen Recheneinrichtung (18) und einer zentralen elektronischen Recheneinrichtung (20), wobei das Überwachungssystem (10) zum Durchführen eines Verfahrens nach einem der Ansprüche 1 bis 12 ausgebildet ist.
